(19) Europäisches Patentamt / European Patent Office / Office européen des brevets

(11) **EP 4 621 721 A1**

(12) **EUROPEAN PATENT APPLICATION**
published in accordance with Art. 153(4) EPC

(43) Date of publication:
**24.09.2025 Bulletin 2025/39**

(21) Application number: **22966244.0**

(22) Date of filing: **25.11.2022**

(51) International Patent Classification (IPC):
**G06T 17/00** (2006.01)

(52) Cooperative Patent Classification (CPC):
**G06T 19/20; G06T 13/40; G06T 17/00;
G06V 20/40;** G06T 2219/2021; G06T 2219/2024

(86) International application number:
**PCT/CN2022/134379**

(87) International publication number:
**WO 2024/108555 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Guangzhou Kugou Computer
Technology Co., Ltd.**
**Guangzhou, Guangdong 510660 (CN)**

(72) Inventors:
• **ZHANG, Tengfei**
  **Guangzhou, Guangdong 510660 (CN)**
• **ZHANG, Shuye**
  **Guangzhou, Guangdong 510660 (CN)**
• **CAI, Haijun**
  **Guangzhou, Guangdong 510660 (CN)**

(74) Representative: **Cabinet Beau de Loménie
103, rue de Grenelle / CS 90800
75340 Paris Cedex 07 (FR)**

(54) **FACE IMAGE GENERATION METHOD AND APPARATUS, DEVICE, AND STORAGE MEDIUM**

(57) The present application relates to the technical field of computers, and discloses a face image generation method and apparatus, a device, and a storage medium. The method comprises: acquiring a face image of a first face, acquiring a face image of a second face, and acquiring face vertex data of a plurality of faces having different face shapes and different expressions; fitting the face vertex data of the plurality of faces by using the first face as a fitting target so as to determine a target face shape feature and a target expression feature of the first face; fitting the face vertex data of the plurality of faces by using the second face as a fitting target so as to determine a target face shape feature and a target expression feature of the second face; and generating a target face image of the second face on the basis of the target expression feature of the first face, the target face shape feature of the second face, and a target face texture feature of the second face. The method reduces the time cost and the labor cost.

FIG. 1

EP 4 621 721 A1

**Description**

**TECHNICAL FIELD**

The present disclosure relates to the field of computer technologies, and, in particular, relates to a method, apparatus, and device for generating face images, and a storage medium.

**BACKGROUND**

With the continuous advancement of computer technologies, virtual object driving has been widely applied in various fields and possesses great market value. For example, in film production, virtual objects may be added to a film, and drive to act out corresponding story lines.

Currently, in order to drive a virtual object, it is necessary to construct a three-dimensional model for the virtual object, and a professional action actor wears an action capture device and performs corresponding actions. The action capture device records action data of each of the actions, and maps the action data to the three-dimensional model for the virtual object.

As face driving of a virtual object requires a high level of precision, it is necessary to obtain detailed face action data and construct a detailed face model for the virtual object. However, acquiring the detailed face action data requires an expensive action capture device, and constructing the detailed virtual object face model requires a long time and a large amount of manpower, and thus the current needs including low-cost and rapid iteration fail to be satisfied.

**SUMMARY**

Embodiments of the present disclosure provide a method, apparatus, and device for generating face images, and a storage medium, which greatly reduces time cost and labor cost. The technical solutions are as follows.

In one aspect, a method for generating face images is provided. The method includes:

acquiring a face image of a first face, a face image of a second face, and face vertex data, wherein the face vertex data includes face vertex data of a plurality of faces with different face shapes and different expressions;

fitting the face vertex data of the plurality of faces by using a first face shape feature and a first expression feature as weighting coefficients, iteratively updating the first face shape feature and the first expression feature with the first face as a fitting target such that a fitting result converges to the first face, and determining a first face shape feature and a first expression feature that are obtained from a last update as a target face shape feature and a target expression feature of the first face respectively;

fitting the face vertex data of the plurality of faces by using a second face shape feature and a second expression feature as weighting coefficients, iteratively updating the second face shape feature and the second expression feature with the second face as a fitting target such that a fitting result converges to the second face, and determining a second face shape feature and a second expression feature that are obtained from a last update as a target face shape feature and a target expression feature of the second face respectively; and

generating a target face image of the second face based on the target expression feature of the first face, the target face shape feature of the second face, and a target face texture feature of the second face.

In some embodiments, fitting the face vertex data of the plurality of faces by using the first face shape feature and the first expression feature as weighting coefficients, and iteratively updating the first face shape feature and the first expression feature with the first face as the fitting target such that the fitting result converges to the first face, includes:

acquiring face vertex data of the first face based on the face image of the first face;
fitting the face vertex data of the plurality of faces by using a preset first face shape feature and a preset first expression feature as weighting coefficients;
determining a fitting error based on a fitting result and the face vertex data of the first face; and;
iteratively updating the preset first face shape feature and the preset first expression feature to reduce the fitting error.

In some embodiments, the face vertex data of the first face is two-dimensional data, and the face vertex data of the plurality of faces is three-dimensional data; and determining the fitting error based on the fitting result and the face vertex data of the first face includes:

obtaining two-dimensional face vertex data by projecting three-dimensional face vertex data from the fitting result into a two-dimensional coordinate system; and

determining a difference between the two-dimensional face vertex data as obtained and the face vertex data of the first face as the fitting error.

In some embodiments, the face vertex data of the first face is face key point data of the first face; and fitting the face vertex data of the plurality of faces by using the preset first face shape feature and the preset first expression feature as weighting coefficients includes:

determining, based on the face key point data of the first face, face key point data of the plurality of faces matching the face key point data of the first face; and

fitting the face key point data of the plurality of faces by using the preset first face shape feature and the preset first expression feature as weighting factors.

In one possible implementation, fitting the face vertex data of the plurality of faces by using the first face shape feature and the first expression feature as weighting coefficients, iteratively updating the first face shape feature and the first expression feature with the first face as the fitting target such that the fitting result converges to the first face, and determining the first face shape feature and the first expression feature that are obtained from the last update as the target face shape feature and the target expression feature of the first face respectively, includes:

fitting the face vertex data of the plurality of faces by using the first face shape feature, the first expression feature, and a first face rigidity transformation matrix as weighting coefficients, iteratively updating the first face shape feature, the first expression feature, and the first face rigidity transformation matrix with the first face as a fitting target such that a fitting result converges to the first face, and determining a first face shape feature and a first expression feature that are obtained from a last update as the target face shape feature and the target expression feature of the first face, wherein the face rigid transformation matrix is configured to translate and rotate a face; and

decomposing a target pose angle feature of the first face from a face rigidity transformation matrix obtained from the last update; and

generating the target face image of the second face based on the target expression feature of the first face, the target face shape feature of the second face, and the target face texture feature of the second face, includes:

generating the target face image of the second face based on the target expression feature of the first face, the target pose angle feature of the first face, the target face shape feature of the second face, and the target face texture feature of the second face.

In some embodiments, fitting the face vertex data of the plurality of faces by using the first face shape feature, the first expression feature, and the first face rigidity transformation matrix as weighting coefficients, and iteratively updating the first face shape feature, the first expression feature, and the first face rigidity transformation matrix with the first face as the fitting target such that the fitting result converges to the first face, includes:

obtaining a first fitting result by fitting the face vertex data of the plurality of faces based on a preset first face shape feature and a preset first expression feature;

determining a first face rigidity transformation matrix based on the first fitting result and face vertex data of the first face;

obtaining an updated first face shape feature and an updated first expression feature by updating the preset first face shape feature and the preset first expression feature based on the first face rigidity transformation matrix, the first fitting result, and the face vertex data of the first face;

obtaining a second fitting result by fitting the face vertex data of the plurality of faces based on the updated first face shape feature and the updated first expression feature;

updating the first face rigid transformation matrix based on the second fitting result and the face vertex data of the first face; and

alternately performing an update of the first face rigid transformation matrix and the first face shape feature and the first expression feature until an iteration termination condition is reached.

In some embodiments, acquiring the face vertex data includes:

acquiring a first number of groups of face vertex data, wherein one group of face vertex data corresponds to one face, and the first number of groups of face vertex data is face vertex data obtained by a third number of faces making a second number of expressions; and

obtaining a fourth number of groups of face vertex data by performing dimensionality reduction on the first number of groups of face vertex data, wherein the fourth number is less than the first number.

In some embodiments, obtaining the fourth number of groups of face vertex data by performing dimensionality reduction on the first number of groups of face vertex data includes:
obtaining the fourth number of groups of face vertex data by fusing a plurality of groups of face vertex data satisfying a similarity condition in the first number of groups of face vertex data into one group of face vertex data.

In some embodiments, the face image of the first face is a face image of the first face in any video frame in a reference video, and the second face is a face of a virtual object; and the method further includes:

obtaining a face image of a virtual face corresponding to each of a plurality of video frames of the reference video by sequentially performing, for a face image of a first face in the plurality of video frames, the step of generating the target face image of the second face; and
sequentially displaying, based on an order of the plurality of video frames in the reference video, the face image of the virtual face corresponding to each of the plurality of video frames at a face position of the virtual object.

In another aspect, an apparatus for generating face images is provided. The apparatus includes:

an acquiring module, configured to acquire a face image of a first face, a face image of a second face, and face vertex data, wherein the face vertex data includes face vertex data of a plurality of faces with different face shapes and different expressions;
a fitting module, configured to fit the face vertex data of the plurality of faces by using a first face shape feature and a first expression feature as weighting coefficients, iteratively update the first face shape feature and the first expression feature with the first face as a fitting target such that a fitting result converges to the first face, and determine a first face shape feature and a first expression feature that are obtained from a last update as a target face shape feature and a target expression feature of the first face respectively;
the fitting module, further configured to fit the face vertex data of the plurality of faces by using a second face shape feature and a second expression feature as weighting coefficients, iteratively update the second face shape feature and the second expression feature with the second face as a fitting target such that a fitting result converges to the second face, and determine a second face shape feature and a second expression feature that are obtained from a last update as a target face shape feature and a target expression feature of the second face respectively; and
a generating module, configured to generate a target face image of the second face based on the target expression feature of the first face, the target face shape feature of the second face, and a target face texture feature of the second face.

In some embodiments, the fitting module includes:

an acquiring unit, configured to acquire face vertex data of the first face based on the face image of the first face;
a fitting unit, configured to fit the face vertex data of the plurality of faces by using a preset first face shape feature and a preset first expression feature as weighting coefficients;
a determining unit, configured to determine a fitting error based on a fitting result and the face vertex data of the first face; and
an update unit, configured to iteratively update the preset first face shape feature and the preset first expression feature to reduce the fitting error.

In some embodiments, the face vertex data of the first face is two-dimensional data, and the face vertex data of the plurality of faces is three-dimensional data; and the determining unit is configured to obtain two-dimensional face vertex data by projecting three-dimensional face vertex data from the fitting result into a two-dimensional coordinate system; and determine a difference between the two-dimensional face vertex data as obtained and the face vertex data of the first face as the fitting error.

In some embodiments, the face vertex data of the first face is face key point data of the first face; and the fitting unit is configured to determine, based on the face key point data of the first face, face key point data of the plurality of faces matching the face key point data of the first face; and fit the face key point data of the plurality of faces by using the preset first face shape feature and the preset first expression feature as weighting factors.

In some embodiments, the fitting module is configured to fit the face vertex data of the plurality of faces by using the first face shape feature, the first expression feature, and a first face rigidity transformation matrix as weighting coefficients, iteratively update the first face shape feature, the first expression feature, and the first face rigidity transformation matrix with the first face as a fitting target such that a fitting result converges to the first face, and determine a first face shape feature and a first expression feature that are obtained from a last update as the target face shape feature and the target expression feature of the first face respectively, wherein the face rigid transformation matrix is configured to translate and rotate a face; and decompose a target pose angle feature of the first face from a face rigidity transformation matrix obtained from the last update; and

the generating module is configured to generate the target face image of the second face based on the target expression feature of the first face, the target pose angle feature of the first face, the target face shape feature of the second face, and the target face texture feature of the second face.

In some embodiments, the fitting module includes:

a fitting unit, configured to obtain a first fitting result by fitting the face vertex data of the plurality of faces based on a preset first face shape feature and a preset first expression feature;

a determining unit, configured to determine a first face rigidity transformation matrix based on the first fitting result and face vertex data of the first face;

an updating unit, configured to obtain an updated first face shape feature and an updated first expression feature by updating the preset first face shape feature and the preset first expression feature based on the first face rigidity transformation matrix, the first fitting result, and the face vertex data of the first face;

wherein the fitting unit is further configured to obtain a second fitting result by fitting the face vertex data of the plurality of faces based on the updated first face shape feature and the updated first expression feature;

the updating unit is further configured to update the first face rigid transformation matrix based on the second fitting result and the face vertex data of the first face; and

the updating unit is further configured to alternately perform an update of the first face rigid transformation matrix and the first face shape feature and the first expression feature until an iteration termination condition is reached.

In some embodiments, the acquiring module includes:

an acquiring unit, configured to acquire a first number of groups of face vertex data, wherein one group of face vertex data corresponds to one face, and the first number of groups of face vertex data is face vertex data obtained by a third number of faces making a second number of expressions; and

a dimensionality reduction unit, configured to obtain a fourth number of groups of face vertex data by performing dimensionality reduction on the first number of groups of face vertex data, wherein the fourth number is less than the first number.

In some embodiments, the dimensionality reduction unit is configured to obtain the fourth number of groups of face vertex data by fusing a plurality of groups of face vertex data satisfying a similarity condition in the first number of groups of face vertex data into one group of face vertex data.

In some embodiments, the face image of the first face is a face image of the first face in any video frame in a reference video, and the second face is a face of a virtual object; and the apparatus further includes:

the fitting module and the generating module, configured to obtain a face image of a virtual face corresponding to each of a plurality of video frames of the reference video by sequentially performing, for a face image of a first face in the plurality of video frames, the step of generating the target face image of the second face; and

a display module, configured to sequentially display, based on an order of the plurality of video frames in the reference video, the face image of the virtual face corresponding to each of the plurality of video frames at a face position of the virtual object.

In another aspect, a terminal is provided. The terminal includes a processor and a memory storing at least one piece of program code, wherein the at least one piece of program code, when loaded and executed by the processor, causes the processor to perform the method for generating the face images as described in the above aspect.

In another aspect, a computer-readable storage medium is provided. The computer-readable storage medium stores at least one piece of program code, wherein the at least one piece of program code, when loaded and executed by the processor, causes the processor to perform the method for generating the face images as described in the above aspect.

In another aspect, a computer program product is provided. The computer program product stores at least one piece of program code, wherein the at least one piece of program code, when loaded and executed by the processor, causes the processor to perform the method for generating the face images as described in the above aspect.

The embodiments of the present disclosure provide a method and apparatus for generating face images, a terminal, and a storage medium. A face image of a second face with the same expression as a first face can be generated based on a face image of the first face and the face image of the second face, thereby generating a face image of a virtual face with the same expression as a real face based on a face image of the real face and the face image of the virtual face. The virtual face can be controlled to make the same expression by making different expressions with the real face, thereby realizing the driving of the virtual face without the need to construct a model of the virtual face and without the need to collect motion data through expensive device, which greatly reduces time cost and labor cost.

## BRIEF DESCRIPTION OF THE DRAWINGS

For clearer descriptions of the technical solutions in the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.

FIG. 1 is a schematic diagram of an implementation environment according to some embodiments of the present disclosure;

FIG. 2 is a flowchart of a method for generating face images according to some embodiments of the present disclosure;

FIG. 3 is a flowchart of a method for generating face images according to some embodiments of the present disclosure;

FIG. 4 is a flowchart of a method for generating face images according to some embodiments of the present disclosure;

FIG. 5 is a schematic structural diagram of an apparatus for generating face images according to some embodiments of the present disclosure;

FIG. 6 is a schematic structural diagram of a terminal according to some embodiments of the present disclosure; and

FIG. 7 is a schematic structural diagram of a server according to some embodiments of the present disclosure.

## DETAILED DESCRIPTION

For clearer descriptions of the objectives, technical solutions, and advantages of the present disclosure, the embodiments of the present disclosure are described hereinafter in detail with reference to the accompanying drawings.

It can be understood that the terms "first," "second," "third," "fourth," "fifth," "sixth," and the like used in the present disclosure can be used herein to describe various concepts, but these concepts are not limited by these terms unless otherwise specified. These terms are used only to distinguish one concept from another. For example, without departing from the scope of the present disclosure, the first face can be referred to as the second face, and the second face can be referred to as the first face.

The terms "each," "a plurality of," "at least one," "any," and the like used in the present disclosure are defined as follows: "at least one" includes one, two, or more; "a plurality of " includes two or more; "each" refers to every one of the corresponding multiple ones; "any" refers to any one of the multiple ones. For example, "a plurality of faces" includes three faces, then "each" refers to each of the three faces, and "any" refers to any one of the three faces, which can be the first one, the second one, or the third one.

It should be noted that the information (including, but not limited to, user device information, user personal information, or the like), data (including, but not limited to, data used for analysis, data stored, data displayed, or the like), and signals involved in the present disclosure are authorized by the user or sufficiently authorized by the parties and that the collection, use, and processing of the relevant data are required to comply with relevant laws, regulations, and standards of the relevant countries and regions. For example, the face image of the first face, the face image of the second face, and the face vertex data, and the like in the embodiments of the present disclosure are authorized by the user or are fully authorized by the parties, and the collection, use, and processing of the face image and the face vertex data comply with the relevant laws, regulations, and standards of the relevant countries and regions.

The embodiments of the present disclosure can be applied to any scene such as video post-processing scenes, short video production scenes, live-streaming scenes and virtual game scenes, which is not limited in the embodiments of the present disclosure. The embodiments of the present disclosure are illustrated by taking the video post-processing scene as an example: in the post-production of a science-fiction movie, a dynamic computer graphics (CG) image needs to be added to the movie video, and if the method provided by the embodiments of the present disclosure is adopted, a video of the user making the facial action that the CG needs to make can be shot first, and based on the video and facial image of the CG image, a video of the CG image making the facial action can be generated and added to the movie video. There is no need to build a three-dimensional model of the CG image, nor is it necessary to use an expensive device to collect motion data, which greatly reduces the time cost and labor cost.

The embodiments of the present disclosure provide a method for generating face images performed by a computer device. In some embodiments, the computer device is a terminal, which is a cell phone, a tablet computer, a notebook computer, a desktop computer, and the like, but is not limited thereto. In some embodiments, the computer device is a server, which may be one server, a cluster of servers, or a cloud server for providing services such as cloud computing as well as cloud storage. In some embodiments, the computer device includes a terminal and a server.

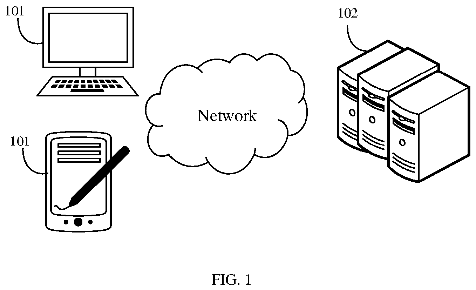

FIG. 1 is a schematic diagram of an implementation environment according to some embodiments of the present disclosure. Referring to FIG. 1, the implementation environment involves a terminal 101 and a server 102. The terminal 101 and the server 102 are connected over a wireless or wired network.

A target application served by the server 102 is installed on the terminal 101, and the terminal 101 may implement functions such as data transmission, message interaction, and the like through the target application. Optionally, the target application is an application in the operating system of the terminal 101, or an application provided by a third party. For example, the target application is a video processing application, a content sharing application, a game application, or the like, which is not limited in the embodiments of the present disclosure. The target application has a function of video processing, and the target application may also have other functions, such as a review function, a shopping function, a navigation function, and the like. Optionally, the server 102 is a background server of the target application or a cloud server that provides services such as cloud computing and cloud storage.

In some embodiments, the terminal 101 sends a face image of the first face and a face image of the second face to the server 102, and the server 102 generates a target face image of the second face based on the face image of the first face and the face image of the second face, and the target face image has the same expression and face gesture angle as the expression and face gesture angle of the first face. In addition, the above process may be jointly accomplished by the terminal 101 and the server 102, and the embodiments of the present disclosure do not limit which steps are done by the terminal 101 and the server 102.

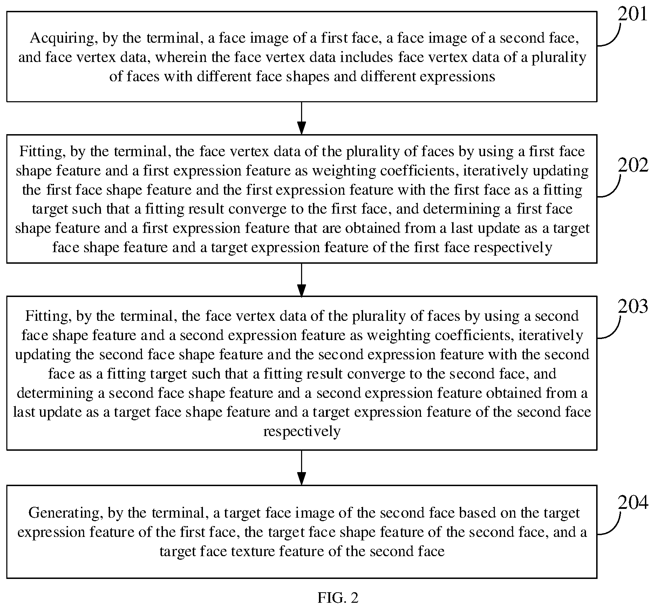

FIG. 2 is a flowchart of a method for generating face images according to some embodiments of the present disclosure. The embodiments of the present disclosure are illustrated exemplarily with the execution subject being a terminal. Referring to FIG. 2, the method includes:

In 201, the terminal acquires a face image of a first face, a face image of a second face, and face vertex data, wherein the face vertex data includes face vertex data of a plurality of faces with different face shapes and different expressions.

The first face may be a face of any object, e.g., a face of a person, a face of a virtual object, or the like. The second face may also be a face of any object, e.g., a face, a face of a virtual object, or the like. The embodiments of the present disclosure do not limit the first face and the second face. It is only necessary to ensure that the first face and the second face are faces of different objects.

In the embodiments of the present disclosure, the obtained face vertex data is the face vertex data of a plurality of faces with different face shapes and different expressions, and the face vertex data of any face is the coordinate data of a plurality of vertices on the face surface of the face, and the plurality of vertices may be any point on the face surface of the face. In some embodiments, the surface of any face is divided into 10,000 grids, one point is taken in each grid to obtain 10,000 points, and the coordinate data of the 10,000 points is used as the face vertex data of the face.

In 202, the terminal fits the face vertex data of the plurality of faces by using a first face shape feature and a first expression feature as weighting coefficients, iteratively updates the first face shape feature and the first expression feature with the first face as a fitting target such that a fitting result converges to the first face, and determines a first face shape feature and a first expression feature that are obtained from a last update as a target face shape feature and a target expression feature of the first face respectively.

As the face vertex data includes face vertex data of a plurality of faces with different face shapes and different expressions, a face with any shape and any expression can be fitted based on the face vertex data. For example, the face vertex data includes face vertex data of a round face and face vertex data of a thin face, and by fitting the face vertex data of the round face with the face vertex data of the thin face, face vertex data of a medium-sized face can be obtained. For another example, the face vertex data includes face vertex data of a big smile and a face vertex data of a natural expression, and by fitting the face vertex data of the big smile and the face vertex data of the natural expression, face vertex data of a smile can be obtained.

That is, by fitting the face vertex data of different faces with a suitable weighting coefficient, the face vertex data of a face with any face shape can be obtained; by fitting the face vertex data of different expressions with a suitable weighting coefficient, the face vertex data of a face with any expression can be obtained. Thus, by fitting the face vertex data of a plurality of faces with different faces and different expressions with two weighting coefficients, the face vertex data of a face with any face shape and any expression can be obtained, and the two weighting coefficients used can be used as the face shape features and expression features of the obtained face.

In 203, the terminal fits the face vertex data of the plurality of faces by using a second face shape feature and a second expression feature as weighting coefficients, iteratively updates the second face shape feature and the second expression feature with the second face as a fitting target such that a fitting result converges to the second face, and determines a second face shape feature and a second expression feature that are obtained from a last update as a target face shape feature and a target expression feature of the second face respectively.

The step 203 is the same as step 202 and will not be described in detail here.

In 204, the terminal generates a target face image of the second face based on the target expression feature of the first face, the target face shape feature of the second face, and a target face texture feature of the second face.

The target face texture feature is used to represent the texture information of the second face, such as skin color and hair. The terminal generates the target face image of the second face based on the target expression feature of the first face, the target face shape feature of the second face, and the target face texture feature of the second face, and the expression of the second face in the target face image is the same as that of the first face. That is, in the embodiments of the present disclosure, a face image of the second face with the same expression as the first face can be generated based on the face image of the first face and the face image of the second face.

For example, the face image of the first face represents the first face making a smiling expression, and the face image of the second face represents the second face with a natural expression. Based on the face image of the first face and the face image of the second face, a target face image of the second face representing a smiling expression may be generated.

In the method for generating the face images provided by embodiments of the present disclosure, a face image of a second face with the same expression as a first face can be generated based on a face image of the first face and the face image of the second face, thereby generating a face image of a virtual face with the same expression as a real face based on a face image of the real face and the face image of the virtual face. The virtual face can be controlled to make the same expression by making different expressions with the real face, thereby realizing the driving of the virtual face without the need to construct a model of the virtual face and without the need to collect motion data through expensive device, which greatly reduces time cost and labor cost.

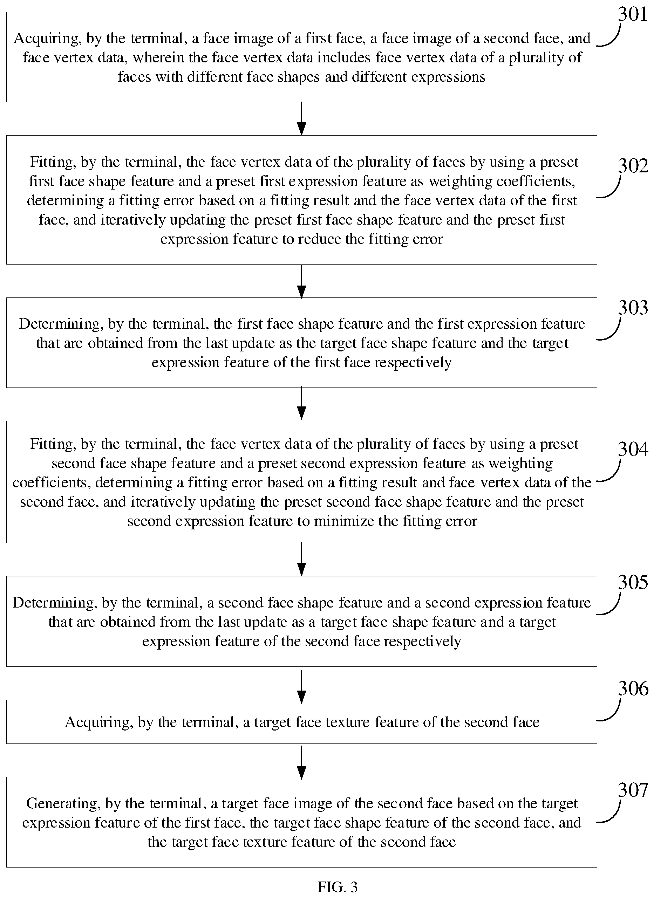

FIG. 3 is a flowchart of a method for generating face images according to some embodiments of the present disclosure. The embodiments of the present disclosure are illustrated exemplarily with the execution subject being a terminal, Referring to FIG. 3, the method includes:

In 301, the terminal acquires a face image of a first face, a face image of a second face, and face vertex data, wherein the face vertex data includes face vertex data of a plurality of faces with different face shapes and different expressions.

In some embodiments, the face image of the first face may be obtained by photographing the first face, or may be stored locally, or may be obtained by other devices. The embodiments of the present disclosure do not limit the acquisition of the face image of the first face. In some embodiments, the face image of the second face may be obtained by photographing the second face, or may be stored locally, or may be obtained by other devices. The embodiments of the present disclosure do not limit the acquisition of the face image of the second face.

In some embodiments, the first face is a real face, and the second face is a virtual face of a virtual object, and the terminal may photograph the first face to obtain a face image of the first face, and the terminal may use the virtual face drawn by the artist as a face image of the second face.

In some embodiments, the face vertex data acquired in step 301 is a plurality of groups of face vertex data, and one group of face vertex data corresponds to one face. The acquiring the face vertex data in step 301 includes: acquiring a first number of groups of face vertex data, wherein one group of face vertex data corresponds to one face, and the first number of groups of face vertex data is face vertex data obtained by a third number of faces making a second number of expressions; and obtaining a fourth number of groups of face vertex data by performing dimensionality reduction on the first number of groups of face vertex data, wherein the fourth number is less than the first number.

Optionally, the face vertex data is the face vertex data in the three-dimensional face core tensor database $F_{core}$. The three-dimensional face core tensor database is obtained by: when each of the n users makes m expressions, obtaining face vertex data when the n users make the m expressions, and performing dimensionality reduction on the obtained $m \times n$ face vertex data to obtain z groups of face vertex data. In some embodiments, n is 1000, m is 52, and z is 50.

It should be noted that the terminal may use any statistical algorithm to reduce the dimension of the first number of groups of face vertex data, and the embodiments of the present disclosure do not limit the specific method of dimensionality reduction.

In some embodiments, obtaining, by the terminal, the fourth number of groups of face vertex data by performing dimensionality reduction on the first number of groups of face vertex data includes: obtaining the fourth number of groups of face vertex data by fusing a plurality of groups of face vertex data satisfying a similarity condition in the first number of groups of face vertex data into one group of face vertex data.

Optionally, satisfying the similarity condition means that the similarity of at least two groups of face vertex data reaches a target threshold. Optionally, the terminal clusters the first number of groups of face vertex data, and determines a plurality of groups of face vertex data belonging to the same cluster as a plurality of groups of face vertex data that satisfy the similarity condition. The embodiments of the present disclosure do not limit how to determine the plurality of groups of face vertex data satisfying the similarity condition.

In 302, the terminal fits the face vertex data of the plurality of faces by using a preset first face shape feature and a preset first expression feature as weighting coefficients, determines a fitting error based on a fitting result and the face vertex data of the first face, and iteratively updates the preset first face shape feature and the preset first expression feature to reduce the fitting error.

Both the first face shape feature and the first expression feature can be regarded as multidimensional vectors, the dimension of the vector is the same as the number of the plurality of faces, and the numerical value in one dimension is used to represent the weighted coefficient of the face vertex data of one face among the face vertex data of the plurality of faces.

The predetermined first face shape feature may be any face shape feature, or ta default face shape feature, or a face shape feature set by a technician, which is not limited in the embodiments of the present disclosure. In some embodiments, the number of the plurality of faces is z, the preset first face shape feature is a z-dimensional vector, and the value in each dimension is 1/z, and the preset first face shape feature may be regarded as a face shape feature of the average face.

The predetermined first expression feature may be any expression feature, or a default expression feature, or an expression feature set by a technician, which is not limited in the embodiments of the present disclosure. In some embodiments, the number of the plurality of faces is z, the predetermined first expression feature is a z-dimensional vector, a value in the first dimension of the predetermined first expression feature is 1, and values in other dimensions are 0; and the preset first expression feature may be regarded as an expression feature of a natural expression.

In some embodiments, when the terminal iteratively updates the preset first face shape feature and the preset first expression feature, the updating stops when the iteration termination condition is reached. The iteration termination condition is that the number of iteration updates reaches a target number, and the target number may be any number, for example, 50 times, 60 times, or the like, which is not limited in the embodiments of the present disclosure. Optionally, the iteration termination condition is that the fitting error is less than an error threshold, the error threshold may be any value, which is not limited in the embodiments of the present disclosure. In addition, the iteration termination condition may also be other conditions, which is not limited in the embodiments of the present disclosure.

In some embodiments, the face vertex data of the plurality of faces is three-dimensional face vertex data. The terminal uses the first face as a target based on the face image of the first face, and the face vertex data obtained by the face image of the first face is two-dimensional face vertex data, and thus the terminal fits the three-dimensional face vertex data of the plurality of faces with the two-dimensional face vertex data of the first face as a target. As the fitting result obtained after fitting the face vertex data of the plurality of faces is three-dimensional face vertex data, the three-dimensional face vertex data obtained by fitting can be mapped to a two-dimensional coordinate system, such that the face vertex data obtained by mapping is two-dimensional face vertex data, and the face vertex data obtained by mapping can be compared with the face vertex data of the first face to determine whether the fitting result is similar to the first face.

In some embodiments, the face vertex data of the first face is two-dimensional data, and the face vertex data of the plurality of faces is three-dimensional data; and determining, by the terminal, the fitting error based on the fitting result and the face vertex data of the first face, includes: obtaining two-dimensional face vertex data by projecting three-dimensional face vertex data from the fitting result into a two-dimensional coordinate system; and determining a difference between the two-dimensional face vertex data as obtained and the face vertex data of the first face as the fitting error. The fitting error may be called a reprojection error.

In some embodiments, the obtained two-dimensional face vertex data is two-dimensional coordinates of a plurality of face vertices, the face data of the first face is two-dimensional coordinates of a plurality of face vertices in the first face, and the difference between the obtained two-dimensional face vertex data and the face vertex data of the first face is: the sum of the differences between the two-dimensional coordinates of each face vertex in the obtained two-dimensional face vertex data and the two-dimensional coordinates of the corresponding face vertex in the first face.

In some embodiments, the number of face vertices is relatively large, and the face vertex data is relatively large. In order to reduce the amount of calculation, the face key points can be selected from the face vertices, and fitting may be performed only based on the face key points. Optionally, the face key points are points on the face contour and the contour of the facial features. In one possible implementation, the face vertex data of the first face is face key point data of the first face; and fitting, by the terminal, the face vertex data of the plurality of faces by using the preset first face shape feature and the preset first expression feature as weighting coefficients, includes: determining, based on the face key point data of the first face, face key point data of the plurality of faces matching the face key point data of the first face; and fitting the face key point data of the plurality of faces by using the preset first face shape feature and the preset first expression feature as weighting factors.

In some embodiments, the terminal may use a nonlinear optimization algorithm to iteratively update the preset first face shape feature and the preset first expression feature, and the nonlinear optimization algorithm may be any optimization algorithm, and the embodiment of the present application does not limit the nonlinear optimization algorithm. Optionally, the nonlinear optimization algorithm is a Newton iteration method.

It should be noted that the embodiments of the present disclosure only take step 302 as an example to exemplify "iteratively updating the first face shape feature and the first expression feature with the first face as the target, using the updated first face shape feature and the updated first expression feature as weighting coefficients, and fitting the face vertex data of the plurality of faces". In other embodiments, the pose angles of the first face and the second face are different. For example, the first face is a profile face, and the second face is a front-facing face. For another example, the first face is in a head-down position, and the second face is in a head-up position. The terminal needs to generate a target face image for the second face with the same pose angle as that of the first face. Therefore, when fitting the face vertex data of the plurality of faces, the pose angle of the first face can also be referred to.

In one possible implementation, fitting the face vertex data of the plurality of faces by using the first face shape feature and the first expression feature as weighting coefficients, iteratively updating the first face shape feature and the first expression feature with the first face as the fitting target such that the fitting result converges to the first face, and determining the first face shape feature and the first expression feature that are obtained from the last update as the target face shape feature and the target expression feature of the first face respectively, includes: fitting the face vertex data of the plurality of faces by using the first face shape feature, the first expression feature, and a first face rigidity transformation matrix as weighting coefficients, iteratively updating the first face shape feature, the first expression feature, and the first face rigidity transformation matrix with the first face as a fitting target such that a fitting result converges to the first face, and determining a first face shape feature and a first expression feature that are obtained from a last update as the target face shape feature and the target expression feature of the first face respectively, wherein the face rigid transformation matrix is configured to translate and rotate a face; and decomposing a target pose angle feature of the first face from a face rigidity transformation matrix obtained from the last update.

As the face rigidity transformation matrix is used to translate and rotate the face, the face rotation matrix can be obtained by decomposing the face rigidity transformation matrix, i.e., the target pose angle feature of the first face can be obtained.

In some embodiments, the first face shape feature, the first expression feature, and the first face rigidity transformation matrix may be updated simultaneously. In some embodiments, the first face shape feature, the first expression feature, and the first face rigidity transformation matrix may be updated alternately.

In one possible implementation, the first face shape feature, the first expression feature, and the first face rigidity transformation matrix are updated alternately, i.e., the first face rigidity transformation matrix is updated, then the first face shape feature and the first expression feature are updated, then the first face rigidity transformation matrix is updated, then the first face shape feature and the first expression feature are updated, then the first face rigidity transformation matrix is updated, and so on.

Optionally, iteratively updating the first face shape feature, the first expression feature, and the first face rigidity transformation matrix with the first face as the target, and fitting the face vertex data of the plurality of faces by using the updated first face shape feature, the updated first expression feature, and the updated rigidity face transformation matrix as weighting coefficients, includes: obtaining a first fitting result by fitting the face vertex data of the plurality of faces based on a preset first face shape feature and a preset first expression feature; determining a first face rigidity transformation matrix based on the first fitting result and face vertex data of the first face; obtaining an updated first face shape feature and an updated first expression feature by updating the preset first face shape feature and the preset first expression feature based on the first face rigidity transformation matrix, the first fitting result, and the face vertex data of the first face; obtaining a second fitting result by fitting the face vertex data of the plurality of faces based on the updated first face shape feature and the updated first expression feature; updating the first face rigid transformation matrix based on the second fitting result and the face vertex data of the first face; and alternately performing an update of the first face rigid transformation matrix and the first face shape feature and the first expression feature until an iteration termination condition is reached.

Optionally, the fitting error may be expressed as:

$$\mathrm{argmin}_{Rt,id,exp} \sum_{i=0}^{n-1} \left\| RtF_{Core}^{i} \times_1 id \times_2 exp - s_i \right\|_2^2;$$

wherein argminf (x) represents the variable value when the objective function f(x) takes the minimum value. Rt represents the rigid transformation matrix of the first face, id represents the first face shape feature, exp represents the first expression feature, $F_{Core}^{i}$ represents the face vertex data of the $i^{th}$ vertex in the face vertex data of the plurality of faces; $s_i$ is the vertex data of the $i^{th}$ face vertex of the first face, n is the number of vertex pairs, and $\|x\|_2^2$ represents the square of the 2-norm of x.

In 303, the terminal determines the first face shape feature and the first expression feature that are obtained from the last update as the target face shape feature and the target expression feature of the first face respectively.

If the obtained fitting result is similar to the first face, it means that the adopted face shape feature and the expression feature can better represent the face shape and expression of the first face, and thus the adopted face shape feature and expression feature can be used as the target face shape feature and the target expression feature of the first face, i.e., the real face feature and the real expression feature of the first face.

In 304, the terminal fits the face vertex data of the plurality of faces by using a preset second face shape feature and a preset second expression feature as weighting coefficients, determines a fitting error based on a fitting result and face vertex data of the second face, and iteratively updates the preset second face shape feature and the preset second expression feature to minimize the fitting error.

In 305, the terminal determines a second face shape feature and a second expression feature that are obtained from the last update as a target face shape feature and a target expression feature of the second face respectively.

It should be noted that steps 304 to 305 are the same as steps 302 to 303, and will not be repeated herein. Another point to be noted is that the preset second face shape feature is the same as the preset first face shape feature, and the preset second expression feature is the same as the preset first expression feature. In addition, the preset second face shape feature and the preset first face shape feature may also be different, and the preset second expression feature and the preset first expression feature may also be different, and the embodiments of the present disclosure do not limit the preset first face shape feature, the preset second face shape feature, the preset first expression feature, and the preset second expression feature.

In 306, the terminal acquires a target face texture feature of the second face.

In some embodiments, the target face texture feature of the second face may be obtained locally or extracted by a feature extraction layer or a feature extraction model. The embodiments of the present disclosure do not limit the method of obtaining the target face texture feature.

In some embodiments, the target face texture feature includes shallow features and deep features. Acquiring, by the terminal, the face texture feature of the virtual face, includes: inputting the face image of the second face into the connected plurality of feature extraction layers; sequentially performing feature extraction on the face image of the second face through the plurality of feature extraction layers, and acquiring the face texture feature output by the plurality of feature extraction layers respectively; and determining the target face texture feature of the second face based on the face texture feature output by the plurality of feature extraction layers.

For example, the target face texture feature is:

$$ f_t = [f_t^0, f_t^1, \dots, f_t^{n-1}] = [E_t^0(I_a), E_t^1(I_a), \dots, E_t^{n-1}(I_a)]; $$

wherein $f_t$ is the target face texture feature of the second face, and $f_t^i$ and $E_t^i(I_a)$ represent the face texture features output by the $i^{th}$ feature extraction layer of the feature extraction model E.

In 307, the terminal generates a target face image of the second face based on the target expression feature of the first face, the target face shape feature of the second face, and the target face texture feature of the second face.

In some embodiments, the terminal may also acquire the target pose angle feature of the first face and the target pose angle feature of the second face. When generating a target face image of the second face, the terminal may also take the target pose angle feature of the first face as a reference, such that the pose angle of the second face in the generated target face image is the same as the pose angle of the first face. Generating, by the terminal, the target face image of the second face based on the target expression feature of the first face, the target face shape feature of the second face, and the target face texture feature of the second face, includes: generating, by the terminal, the target face image of the second face based on the target expression feature of the first face, the target pose angle feature of the first face, the target face shape feature of the second face, and the target face texture feature of the second face image.

In some embodiments, the target face texture feature includes shallow texture features and deep texture features of the second face, such that when generating the target face image, the texture of the second face in the obtained target face image does not lose much information, and the obtained texture is similar to the original texture of the second face.

Optionally, generating, by the terminal, the target face image of the second face based on the target expression feature of the first face, the target face shape feature of the second face, and the target face texture feature of the second face, includes: for the face texture feature output by the first feature extraction layer, obtaining a first fused feature by fusing the face texture feature output by the first feature extraction layer with the target expression feature of the first face and the target face shape feature of the second face; for the face texture feature output by any feature extraction layer after the first feature extraction layer, obtaining a second fused feature by fusing the fused feature corresponding to the face texture feature output by the previous feature extraction layer, the face texture feature output by the feature extraction layer, the target expression feature of the first face, and the target face shape feature of the second face; and generating the target face image of the second face based on the fused features corresponding to the face texture feature output by the last feature extraction layer.

Optionally, a decoder is configured to generate the target face image of the second face based on the target expression feature of the first face, the target face shape feature of the second face, and the target face texture feature of the second face. Optionally, the decoder is multi-layered, and the output of each layer may be:

$$ f_{out}^{i+1} = D_e^i(f_{out}^i, f_t^i, f_e); $$

wherein $f_{out}^i$ represents the fused features output from the $i^{th}$ layer of the decoder, $D_e^i$ represents the decoding function of the $i^{th}$ layer, wherein $f_{out}^0$ is calculated by $f_t^0$ through deconvolution, and $f_e$ represents the target expression features of the first face, the target face shape features of the second face, and the target pose angle features of the second face.

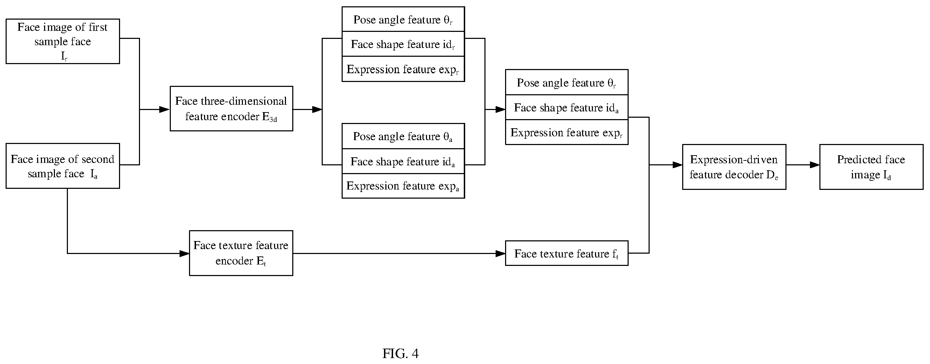

In some embodiments, steps 302 to 307 are implemented by an image generation model, as shown in FIG. 4, the image generation model includes a face three-dimensional feature encoder, a face texture feature encoder, and an expression-driven feature decoder. The face image of the first face and the face image of the second face are input into the face three-dimensional feature encoder, and the face three-dimensional feature encoder performs steps 302 to 305 to obtain the target pose angle feature, target face shape feature, and target expression feature of the first face, and the target pose angle feature, target face shape feature, and target expression feature of the second face; the face image of the second face is input into the face texture feature encoder, and the face texture feature encoder performs step 306 to obtain the target face texture feature of the second face; the target expression feature and target pose angle feature of the first face, the face shape feature and target face texture feature of the second face are input into the expression-driven feature decoder, and the expression-driven feature decoder performs step 307 to obtain the target face image of the second face.

The following is an exemplary illustration of the training method of the image generation model described above: After a face image of a first sample face and a face image of a second sample face are input into the image generation model, the image generation model outputs the predicted face image of the second sample face. Then, based on the difference between the pose angle feature of the predicted face image and the pose angle feature of the first sample face, the difference between the expression feature of the predicted face image and the pose angle feature of the first sample face, the difference between the face shape feature of the predicted face image and the face shape feature of the second sample face, and the difference between the face texture feature of the predicted face image and the face texture feature of the second sample face, the loss value of the image generation model is determined, and the image generation model is trained based on the loss value.

For example, the loss value of the image generation model is:

$$L = \lambda_\theta L_\theta + \lambda_{id} L_{id} + \lambda_{exp} L_{exp} + \lambda_{rec} L_{rec} + \lambda_{tex} L_{tex};$$

$$L_\theta = \|\theta_d - \theta_r\|_2^2;$$

$$L_{id} = 1 - \frac{id_d \cdot id_a}{\|id_d\|_2 \|id_a\|_2};$$

$$L_{exp} = \|exp_d - exp_r\|_2^2;$$

$$L_{rec} = \|I_d - I_a\|_1;$$

$$L_{tex} = \sum_{i=0}^{n-1} \left\| E_t^i(I_d) - E_t^i(I_a) \right\|_1;$$

wherein L represents the loss value, $L_\theta$, $L_{id}$, $L_{exp}$, $L_{rec}$, and $L_{tex}$ represent face pose angle, face shape loss, expression loss, image reconstruction loss, and texture loss, respectively, and $\lambda_\theta$, $\lambda_{id}$, $\lambda_{exp}$, $\lambda_{rec}$, and $\lambda_{tex}$ represent the loss weights corresponding to $L_\theta$, $L_{id}$, $L_{exp}$, $L_{rec}$, and $L_{tex}$, respectively. $L_\theta$ is obtained by calculating the square of the 2-norm of the difference between the pose angle of the first sample face and the predicted face image. $L_{id}$ is obtained by calculating the cosine similarity between the face shape feature $id_d$ of the second sample face and the face shape feature $id_a$ of the predicted face image, $L_{exp}$ is obtained by calculating the square of the 2-norm of the difference between the expression feature $exp_d$ of the predicted face image and the expression feature $exp_r$ of the first sample face, $L_{rec}$ is obtained by calculating the 1-norm of the difference between the predicted face image $I_d$ and the face image $I_a$ of the second sample face. $L_{tex}$ is obtained by extracting the texture features of the predicted face image $I_d$ and the face image $I_a$ of the second sample face by layer using the facial texture feature encoder, and calculating the 1-norm of the difference of all layers of texture features between the predicted face image $I_d$ and the face image $I_a$ of the second sample face.

In some embodiments, the face image of the first face is a face image of the first face in any video frame in a reference video, and the second face is a face of a virtual object; and the method further includes: obtaining a face image of a virtual face corresponding to each of a plurality of video frames of the reference video by sequentially performing, for a face image of a first face in the plurality of video frames, the step of generating the target face image of the second face; and sequentially displaying, based on the order of the plurality of video frames in the reference video, the face image of the virtual face corresponding to each of the plurality of video frames at a face position of the virtual object. In other words, the virtual face of the virtual object can be driven by recording a video of the first face.

It should be noted that when generating face images of virtual faces corresponding to a plurality of video frames based on a reference video, the target face texture feature can be directly obtained by any device such as a terminal or a server, or can be extracted by a feature extraction layer or a feature extraction model. The target face texture features can also be extracted by the feature extraction layer or the feature extraction model when generating the face image of the virtual face corresponding to the first video frame, and the target face texture features can be directly used subsequently without extraction.

In the method for generating the face images provided by the embodiments of the present disclosure, a face image of a second face with the same expression as a first face can be generated based on a face image of the first face and the face image of the second face, thereby generating a face image of a virtual face with the same expression as a real face based on a face image of the real face and the face image of the virtual face. The virtual face can be controlled to make the same expression by making different expressions with the real face, thereby realizing the driving of the virtual face without the need to construct a model of the virtual face and without the need to collect motion data through expensive device, which greatly reduces time cost and labor cost.

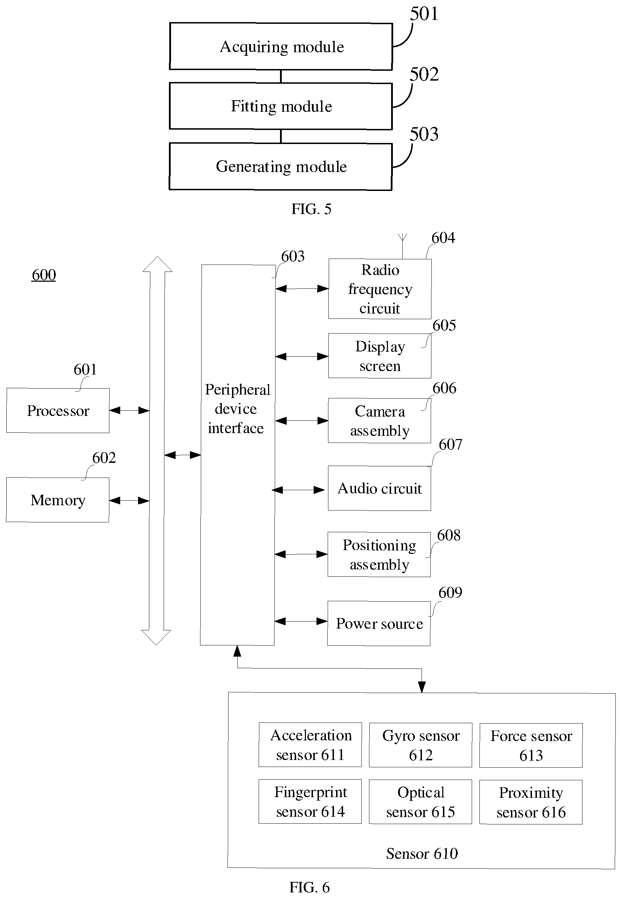

FIG. 5 is a schematic structural diagram of an apparatus for generating face images according to some embodiments of the present disclosure. Referring to FIG. 5, the apparatus includes an acquiring module 501, a fitting module 502, and a generating module 503.

The acquiring module 501 is configured to acquire a face image of a first face, a face image of a second face, and face vertex data, wherein the face vertex data includes face vertex data of a plurality of faces with different face shapes and different expressions.

The fitting module 502 is configured to fit the face vertex data of the plurality of faces by using a first face shape feature and a first expression feature as weighting coefficients, iteratively update the first face shape feature and the first expression feature with the first face as a fitting target such that a fitting result converges to the first face, and determine a first face shape feature and a first expression feature that are obtained from a last update as a target face shape feature and a target expression feature of the first face respectively.

The fitting module 502 is further configured to fit the face vertex data of the plurality of faces by using a second face shape feature and a second expression feature as weighting coefficients, iteratively update the second face shape feature and the second expression feature with the second face as a fitting target such that a fitting result converges to the second face, and determine a second face shape feature and a second expression feature that are obtained from a last update as a target face shape feature and a target expression feature of the second face respectively.

The generating module 503 is configured to generate a target face image of the second face based on the target expression feature of the first face, the target face shape feature of the second face, and a target face texture feature of the second face.

In some embodiments, the fitting module 502 includes:

an acquiring unit, configured to acquire face vertex data of the first face based on the face image of the first face;
a fitting unit, configured to fit the face vertex data of the plurality of faces by using a preset first face shape feature and a preset first expression feature as weighting coefficients;
a determining unit, configured to determine a fitting error based on a fitting result and the face vertex data of the first face; and
an update unit, configured to iteratively update the preset first face shape feature and the preset first expression feature to reduce the fitting error.

In some embodiments, the face vertex data of the first face is two-dimensional data, and the face vertex data of the plurality of faces is three-dimensional data; and the determining unit is configured to obtain two-dimensional face vertex data by projecting three-dimensional face vertex data from the fitting result into a two-dimensional coordinate system, and determine a difference between the two-dimensional face vertex data as obtained and the face vertex data of the first face as the fitting error.

In some embodiments, the face vertex data of the first face is face key point data of the first face; and the fitting unit is configured to determine, based on the face key point data of the first face, face key point data of the plurality of faces matching the face key point data of the first face; and fit the face key point data of the plurality of faces by using the preset first face shape feature and the preset first expression feature as weighting factors.

In some embodiments, the fitting module 502 is configured to fit the face vertex data of the plurality of faces by using the first face shape feature, the first expression feature, and a first face rigidity transformation matrix as weighting coefficients, iteratively update the first face shape feature, the first expression feature, and the first face rigidity transformation matrix with the first face as a fitting target such that a fitting result converges to the first face, and determine a first face shape feature and a first expression feature that are obtained from a last update as the target face shape feature and the target expression feature of the first face respectively, wherein the face rigid transformation matrix is configured to translate and rotate a face; and decompose a target pose angle feature of the first face from a face rigidity transformation matrix obtained from the last update; and the generation module 503 is configured to generate the target face image of the second face based on the target expression feature of the first face, the target pose angle feature of the first face, the target face shape feature of the second face, and the target face texture feature of the second face.

In some embodiments, the fitting module 502 includes:

a fitting unit, configured to obtain a first fitting result by fitting the face vertex data of the plurality of faces based on a preset first face shape feature and a preset first expression feature;

a determining unit, configured to determine a first face rigidity transformation matrix based on the first fitting result and face vertex data of the first face; and

an updating unit, configured to obtain an updated first face shape feature and an updated first expression feature by updating the preset first face shape feature and the preset first expression feature based on the first face rigidity transformation matrix, the first fitting result, and the face vertex data of the first face;

wherein the fitting unit is further configured to obtain a second fitting result by fitting the face vertex data of the plurality of faces based on the updated first face shape feature and the updated first expression feature;

the updating unit is further configured to update the first face rigid transformation matrix based on the second fitting result and the face vertex data of the first face; and

the updating unit is further configured to alternately perform an update of the first face rigid transformation matrix and the first face shape feature and the first expression feature until an iteration termination condition is reached.

In some embodiments, the acquiring module 501 includes:

an acquiring unit, configured to acquire a first number of groups of face vertex data, wherein one group of face vertex data corresponds to one face, and the first number of groups of face vertex data is face vertex data obtained by a third number of faces making a second number of expressions; and

a dimensionality reduction unit, configured to obtain a fourth number of groups of face vertex data by performing dimensionality reduction on the first number of groups of face vertex data, wherein the fourth number is less than the first number.

In some embodiments, the dimensionality reduction unit is configured to obtain the fourth number of groups of face vertex data by fusing a plurality of groups of face vertex data satisfying a similarity condition in the first number of groups of face vertex data into one group of face vertex data.

In some embodiments, the face image of the first face is a face image of the first face in any video frame in a reference video, and the second face is a face of a virtual object; and the apparatus further includes: the fitting module 502 and the generating module 503, configured to obtain a face image of a virtual face corresponding to each of a plurality of video frames of the reference video by sequentially performing, for a face image of a first face in the plurality of video frames, the step of generating the target face image of the second face; and a display module, configured to sequentially display, based on the order of the plurality of video frames in the reference video, the face image of the virtual face corresponding to each of the plurality of video frames at a face position of the virtual object.

FIG. 6 is a schematic structural diagram of a terminal according to some embodiments of the present disclosure. The terminal 600 may be a portable mobile terminal, such as a smart phone, a tablet computer, a notebook computer, a desktop computer, a smart home appliance, a smart watch, or the like. The terminal 600 may also be called a user device, a portable terminal, a laptop terminal, a desktop terminal, or the like.

Generally, the terminal 600 includes a processor 601 and a memory 602.

The processor 601 may include one or more processing cores, such as a 4-core processor and an 8-core processor. The processor 601 may be implemented by at least one of hardware forms of a digital signal processor (DSP), a field-programmable gate array (FPGA), and a programmable logic array (PLA). The processor 601 may also include a main processor and a coprocessor. The main processor is a processor for processing the data in an awake state, and is also called a central processing unit (CPU). The coprocessor is a low-power-consumption processor for processing the data in a standby state. In some embodiments, the processor 601 may be integrated with a graphics processing unit (GPU), which is configured to render and draw the content that needs to be displayed by a display screen. In some embodiments, the processor 601 may also include an Artificial Intelligence (AI) processor configured to process computational operations related to machine learning.

The memory 602 may include one or more computer-readable storage media, which may be non-transitory. The memory 602 may further include a high-speed random access memory, as well as a nonvolatile memory, such as one or more disk storage devices and flash storage devices. In some embodiments, a non-transitory computer-readable storage medium in the memory 602 is configured to store at least one program code. The at least one program code is configured to be executed by the processor 601 to perform the process executed by the terminal in the method for generating the face images according to the method embodiments of the present disclosure.

In some embodiments, the terminal 600 may also optionally include a peripheral device interface 603 and at least one peripheral device. The processor 601, the memory 602, and the peripheral device interface 603 may be connected by a bus or a signal line. Each peripheral device may be connected to the peripheral device interface 603 via a bus, a signal line, or a circuit board. In some embodiments, the peripheral device includes at least one of a radio frequency circuit 604, a display screen 605, a camera assembly 606, an audio circuit 607, a positioning assembly 608, and a power source 609.

The peripheral device interface 603 may be configured to connect at least one peripheral device associated with an input/output (I/O) to the processor 601 and the memory 602. In some embodiments, the processor 601, the memory 602, and the peripheral device interface 603 are integrated on the same chip or circuit board. In some other embodiments, any one or two of the processor 601, the memory 602, and the peripheral device interface 603 may be implemented on a separate chip or circuit board, which is not limited in the embodiments of the present disclosure.

The radio frequency circuit 604 is configured to receive and transmit a radio frequency (RF) signal, which is also referred to as an electromagnetic signal. The radio frequency circuit 604 is communicated with a communication network and other communication devices via the electromagnetic signal. The radio frequency circuit 604 converts an electrical signal to the electromagnetic signal for transmission or converts the received electromagnetic signal to the electrical signal. In some embodiments, the radio frequency circuit 604 includes an antenna system, an RF transceiver, one or more amplifiers, a tuner, an oscillator, a digital signal processor, a coder/decoder (codec) chipset, a subscriber identity module (SIM) card, or the like. The radio frequency circuit 604 may be communicated with other terminals in accordance with at least one wireless communication protocol. The wireless communication protocol includes, but is not limited to, a metropolitan area network, various generations of mobile communication networks (2G, 3G, 4G, and 5G), a wireless local area network (WAN), and/or a wireless fidelity (Wi-Fi) network. In some embodiments, the radio frequency circuit 604 may also include a near-field communication (NFC) related circuit, which is not limited in the present disclosure.

The display screen 605 is configured to display a user interface (UI). The UI may include graphics, texts, icons, videos, and any combination thereof. In the case that the display screen 605 is a touch display screen, the display screen 605 also can acquire a touch signal on or over the surface of the display screen 605. The touch signal may be input into the processor 601 as a control signal for processing. In this case, the display screen 605 may also be configured to provide virtual buttons and/or virtual keyboards, which are also referred to as soft buttons and/or soft keyboards. In some embodiments, one display screen 605 may be disposed on the front panel of the terminal 600. In some other embodiments, at least two display screens 605 may be disposed on different surfaces of the terminal 600 respectively or in a folded design. In further embodiments, the display screen 605 may be a flexible display screen disposed on the bending or folded surface of the terminal 600. Moreover, the display screen 605 may have an irregular shape other than a rectangle, that is, the display screen 605 may be irregular-shaped. The display screen 605 may be a liquid crystal display (LCD) screen, an organic light-emitting diode (OLED) screen, or the like.

The camera assembly 606 is configured to capture images or videos. In some embodiments, the camera assembly 606 includes a front camera and a rear camera. Usually, the front camera is arranged on the front panel of the terminal and the rear camera is arranged on the back surface of the terminal. In some embodiments, at least two rear cameras are arranged, and each of the at least two rear cameras is at least one of a main camera, a depth-of-field camera, a wide-angle camera, and a telephoto camera, to realize a background blurring function realized by fusion of the main camera and the depth-of-field camera, panoramic shooting and virtual reality (VR) shooting functions by fusion of the main camera and the wide-angle camera, or other fusion shooting functions. In some embodiments, the camera assembly 606 may further include a flashlight. The flashlight may be a mono-color temperature flashlight or a two-color temperature flashlight. The two-color temperature flashlight is a combination of a warm flashlight and a cool flashlight and may be used for light compensation at different color temperatures.

The audio circuit 607 may include a microphone and a loudspeaker. The microphone is configured to capture sound waves of users and the environment, and convert the sound waves to electrical signals which are input to the processor 601 for processing, or input into the radio frequency circuit 604 for voice communication. For stereo acquisition or noise reduction, there may be a plurality of microphones, which are respectively arranged at different parts of the terminal 600. The microphone can also be an array microphone or an omnidirectional acquisition microphone. The loudspeaker is configured to convert the electrical signal from the processor 601 or the radio frequency circuit 604 to the sound waves. The loudspeaker can be a conventional film loudspeaker or a piezoelectric ceramic loudspeaker. In the case that the loudspeaker is the piezoelectric ceramic loudspeaker, the electrical signals may be converted into not only human-audible sound waves but also the sound waves which are inaudible to humans for ranging and the like. In some embodiments, the audio circuit 607 may also include a headphone jack.

The positioning assembly 608 is configured to locate the current geographic location of the terminal 600 to implement navigation or a location-based service (LBS). The positioning assembly 808 may be the Global Positioning System (GPS) from the United States, the BeiDou Navigation System from China, the Glonass satellite navigation system from Russia or the Galileo Navigation Satellite System from the European Union.

The power source 609 is configured to supply power for various components in the terminal 600. The power source 609 may be an alternating current, a direct current, a disposable battery, or a rechargeable battery. In the case that the power source 609 includes the rechargeable battery, the rechargeable battery may support wired charging or wireless charging. The rechargeable battery may also support the fast-charging technology.

In some embodiments, the terminal 600 also includes one or more sensors 610. The one or more sensors 610 include, but are not limited to, an acceleration sensor 611, a gyro sensor 612, a force sensor 613, a fingerprint sensor 614, an optical sensor 615, and a proximity sensor 616.

The acceleration sensor 611 may detect magnitudes of accelerations on three coordinate axes of a coordinate system established by the terminal 60. For example, the acceleration sensor 611 may be configured to detect components of a gravitational acceleration on the three coordinate axes. The processor 601 may control the display screen 605 to display a user interface in a landscape view or a portrait view based on a gravity acceleration signal acquired by the acceleration sensor 611. The acceleration sensor 611 may also be configured to acquire motion data of a game or a user.

The gyro sensor 612 may detect a body direction and a rotation angle of the terminal 600, and may cooperate with the acceleration sensor 611 to acquire a 3D motion of the user on the terminal 600. Based on the data acquired by the gyro sensor 612, the processor 601 achieves the following functions: motion sensing (such as changing the UI according to a tilt operation of a user), image stabilization during shooting, game control, and inertial navigation.

The force sensor 613 may be disposed on a side frame of the terminal 600 and/or a lower layer of the display screen 602. In the case that the force sensor 613 is disposed on the side frame of the terminal 600, a user's holding signal to the terminal 600 can be detected. The processor 601 can perform left-right hand recognition or quick operation according to the holding signal acquired by the force sensor 613. In the case that the force sensor 613 is disposed on the lower layer of the display screen 602, the processor 601 controls an operable control on the UI based on a user's press operation on the display screen 605. The operable control includes at least one of a button control, a scroll bar control, an icon control, and a menu control.

The fingerprint sensor 614 is configured to acquire a user's fingerprint. The processor 601 identifies the user's identity based on the fingerprint acquired by the fingerprint sensor 614, or the fingerprint sensor 614 identifies the user's identity based on the acquired fingerprint. In the case that the user's identity is identified as trusted, the processor 601 authorizes the user to perform related sensitive operations, such as unlocking the screen, viewing encrypted information, downloading software, paying, and changing settings. The fingerprint sensor 614 may be provided on the front, back, or side of the terminal 600. In the case that the terminal 600 is provided with a physical button or a manufacturer's logo, the fingerprint sensor 614 may be integrated with the physical button or the manufacturer's logo.

The optical sensor 615 is configured to capture ambient light intensity. In an embodiment, the processor 601 may control the display brightness of the display screen 605 based on the ambient light intensity captured by the optical sensor 615. In some embodiments, in the case that the ambient light intensity is higher, the display brightness of the display screen 605 is increased; and in the case that the ambient light intensity is lower, the display brightness of the display screen 605 is decreased. In another embodiment, the processor 601 may also dynamically adjust shooting parameters of the camera assembly 606 based on the ambient light intensity captured by the optical sensor 615.

The proximity sensor 616, also referred to as a distance sensor, is usually disposed on the front panel of the terminal 600. The proximity sensor 616 is configured to capture a distance between the user and a front surface of the terminal 600. In one embodiment, in the case that the proximity sensor 616 detects that the distance between the user and the front surface of the terminal 600 gradually decreases, the processor 601 controls the display screen 605 to switch from a screen-on state to a screen-off state. In the case that the proximity sensor 616 detects that the distance between the user and the front surface of the terminal 600 gradually increases, the processor 601 controls the display screen 605 to switch from the screen-off state to the screen-on state.

It can be understood by those skilled in the art that the structure shown in FIG. 6 does not constitute a limitation to the terminal 600. The terminal 600 may include more or fewer components than those illustrated, combine some components, or adopt different component arrangements.

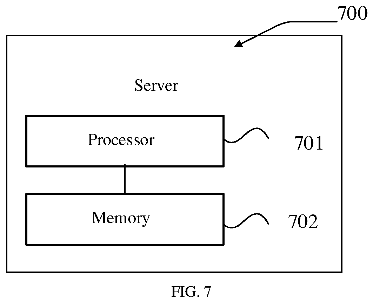

FIG. 7 is a schematic structural diagram of a server according to some embodiments of the present disclosure. The server 700 may vary greatly due to differences in configuration or performance, which may include one or more processors (central processing units, CPUs) 701 and one or more memories 702. At least one piece of program code is stored in the memory 702, and the at least one piece of program code is loaded and executed by the processor 701 to perform the method provided by the above-mentioned various method embodiments. In addition, the server may also have components such as a wired or wireless network interface, a keyboard, and an input/output interface for input and output. The server may also include other components for implementing the functions of the device, which will not be repeated here.

The server 700 is configured to perform the steps performed by the server in the method embodiments as described above.

The embodiments of the present disclosure also provide a computer-readable storage medium storing at least one piece of program code. The at least one piece of program code, when loaded and executed by a processor, causes the processor to implement the operations performed in the above embodiments of the method for generating the face images.

The embodiments of the present disclosure also provide a computer program product storing at least one piece of program code. The at least one piece of program code, when loaded and executed by a processor, causes the processor to implement the operations performed in the above embodiments of the method for generating the face images.

In some embodiments, the program code involved in the embodiments of the present disclosure may be deployed and executed on one server, or executed on a plurality of servers located in one place. Alternatively, the program code may be executed on a plurality of servers distributed at a plurality of locations and interconnected via a communication network, and a plurality of servers distributed at a plurality of locations and interconnected via a communication network can form a blockchain system.

Persons of ordinary skill in the art may understand that some or all of the steps in the above embodiments may be performed by hardware or by a program instructing related hardware. The program may be stored in a computer-readable storage medium, for example, a read-only memory, a magnetic disk, an optical disk, or the like.

Described above are merely optional embodiments of the present disclosure and are not intended to limit the embodiments of the present disclosure. Any modification, equivalent replacement, improvement, or the like made shall fall within the protection scope of the present disclosure, without departing from the spirit and principle of the embodiments of the present disclosure.

**Claims**

1. A method for generating face images, comprising:

   acquiring a face image of a first face, a face image of a second face, and face vertex data, wherein the face vertex data comprises face vertex data of a plurality of faces with different face shapes and different expressions;

   fitting the face vertex data of the plurality of faces by using a first face shape feature and a first expression feature as weighting coefficients, iteratively updating the first face shape feature and the first expression feature with the first face as a fitting target such that a fitting result converges to the first face, and determining a first face shape feature and a first expression feature that are obtained from a last update as a target face shape feature and a target expression feature of the first face respectively;

   fitting the face vertex data of the plurality of faces by using a second face shape feature and a second expression feature as weighting coefficients, iteratively updating the second face shape feature and the second expression feature with the second face as a fitting target such that a fitting result converges to the second face, and determining a second face shape feature and a second expression feature that are obtained from a last update as a target face shape feature and a target expression feature of the second face respectively; and

   generating a target face image of the second face based on the target expression feature of the first face, the target face shape feature of the second face, and a target face texture feature of the second face.

2. The method according to claim 1, wherein fitting the face vertex data of the plurality of faces by using the first face shape feature and the first expression feature as weighting coefficients, and iteratively updating the first face shape feature and the first expression feature with the first face as the fitting target such that the fitting result converges to the first face comprise:

   acquiring face vertex data of the first face based on the face image of the first face;

   fitting the face vertex data of the plurality of faces by using a preset first face shape feature and a preset first expression feature as weighting coefficients;

   determining a fitting error based on a fitting result and the face vertex data of the first face; and

   iteratively updating the preset first face shape feature and the preset first expression feature to reduce the fitting error.

3. The method according to claim 2, wherein the face vertex data of the first face is two-dimensional data, and the face vertex data of the plurality of faces is three-dimensional data; and determining the fitting error based on the fitting result and the face vertex data of the first face comprises:

   obtaining two-dimensional face vertex data by projecting three-dimensional face vertex data from the fitting result into a two-dimensional coordinate system; and

   determining a difference between the two-dimensional face vertex data as obtained and the face vertex data of the first face as the fitting error.

4. The method according to claim 2, wherein the face vertex data of the first face is face key point data of the first face; and fitting the face vertex data of the plurality of faces by using the preset first face shape feature and the preset first expression feature as weighting coefficients comprises:

determining, based on the face key point data of the first face, face key point data of the plurality of faces matching the face key point data of the first face; and
fitting the face key point data of the plurality of faces by using the preset first face shape feature and the preset first expression feature as weighting factors.

5. The method according to claim 1, wherein

fitting the face vertex data of the plurality of faces by using the first face shape feature and the first expression feature as weighting coefficients, iteratively updating the first face shape feature and the first expression feature with the first face as the fitting target such that the fitting result converges to the first face, and determining the first face shape feature and the first expression feature that are obtained from the last update as the target face shape feature and the target expression feature of the first face respectively comprise:

fitting the face vertex data of the plurality of faces by using the first face shape feature, the first expression feature, and a first face rigidity transformation matrix as weighting coefficients, iteratively updating the first face shape feature, the first expression feature, and the first face rigidity transformation matrix with the first face as a fitting target such that a fitting result converges to the first face, and determining a first face shape feature and a first expression feature that are obtained from a last update as the target face shape feature and the target expression feature of the first face respectively, wherein the face rigid transformation matrix is configured to translate and rotate a face; and
decomposing a target pose angle feature of the first face from a face rigidity transformation matrix obtained from the last update; and

generating the target face image of the second face based on the target expression feature of the first face, the target face shape feature of the second face, and the target face texture feature of the second face comprises:
generating the target face image of the second face based on the target expression feature of the first face, the target pose angle feature of the first face, the target face shape feature of the second face, and the target face texture feature of the second face.

6. The method according to claim 5, wherein fitting the face vertex data of the plurality of faces by using the first face shape feature, the first expression feature, and the first face rigidity transformation matrix as weighting coefficients, and iteratively updating the first face shape feature, the first expression feature, and the first face rigidity transformation matrix with the first face as the fitting target such that the fitting result converges to the first face comprise:

obtaining a first fitting result by fitting the face vertex data of the plurality of faces based on a preset first face shape feature and a preset first expression feature;
determining a first face rigidity transformation matrix based on the first fitting result and face vertex data of the first face;
obtaining an updated first face shape feature and an updated first expression feature by updating the preset first face shape feature and the preset first expression feature based on the first face rigidity transformation matrix, the first fitting result, and the face vertex data of the first face;
obtaining a second fitting result by fitting the face vertex data of the plurality of faces based on the updated first face shape feature and the updated first expression feature;
updating the first face rigid transformation matrix based on the second fitting result and the face vertex data of the first face; and
alternately performing an update of the first face rigid transformation matrix and the first face shape feature and the first expression feature until an iteration termination condition is reached.

7. The method according to claim 1, wherein acquiring the face vertex data comprises:

acquiring a first number of groups of face vertex data, wherein one group of face vertex data corresponds to one face, and the first number of groups of face vertex data is face vertex data obtained by a third number of faces making a second number of expressions; and
obtaining a fourth number of groups of face vertex data by performing dimensionality reduction on the first number of groups of face vertex data, wherein the fourth number is less than the first number.

8. The method according to claim 7, wherein obtaining the fourth number of groups of face vertex data by performing dimensionality reduction on the first number of groups of face vertex data comprises:
obtaining the fourth number of groups of face vertex data by fusing a plurality of groups of face vertex data satisfying a similarity condition in the first number of groups of face vertex data into one group of face vertex data.

9. The method according to claim 1, wherein the face image of the first face is a face image of the first face in any video frame in a reference video, and the second face is a face of a virtual object; and the method further comprises:

obtaining a face image of a virtual face corresponding to each of a plurality of video frames of the reference video by sequentially performing, for a face image of a first face in the plurality of video frames, the step of generating the target face image of the second face; and
sequentially displaying, based on an order of the plurality of video frames in the reference video, the face image of the virtual face corresponding to each of the plurality of video frames at a face position of the virtual object.

10. An apparatus for generating face images, comprising:

an acquiring module, configured to acquire a face image of a first face, a face image of a second face, and face vertex data, wherein the face vertex data comprises face vertex data of a plurality of faces with different face shapes and different expressions;
a fitting module, configured to fit the face vertex data of the plurality of faces by using a first face shape feature and a first expression feature as weighting coefficients, iteratively update the first face shape feature and the first expression feature with the first face as a fitting target such that a fitting result converges to the first face, and determine a first face shape feature and a first expression feature that are obtained from a last update as a target face shape feature and a target expression feature of the first face respectively;
wherein the fitting module, further configured to fit the face vertex data of the plurality of faces by using a second face shape feature and a second expression feature as weighting coefficients, iteratively update the second face shape feature and the second expression feature with the second face as a fitting target to such that a fitting result converges to the second face, and determine a second face shape feature and a second expression feature that are obtained from a last update as a target face shape feature and a target expression feature of the second face respectively; and
a generating module, configured to generate a target face image of the second face based on the target expression feature of the first face, the target face shape feature of the second face, and a target face texture feature of the second face.

11. A terminal, comprising a processor and a memory storing at least one piece of program code, wherein the at least one piece of program code, when loaded and executed by the processor, causes the processor to perform the method for generating face images as defined in any one of claims 1 to 9.

12. A computer-readable storage medium storing at least one piece of program code, wherein the at least one piece of program code, when loaded and executed by the processor, causes the processor to perform the method for generating face images as defined in any one of claims 1 to 9.

EP 4 621 721 A1

FIG. 1

20

Acquiring, by the terminal, a face image of a first face, a face image of a second face, and face vertex data, wherein the face vertex data includes face vertex data of a plurality of faces with different face shapes and different expressions

201

Fitting, by the terminal, the face vertex data of the plurality of faces by using a first face shape feature and a first expression feature as weighting coefficients, iteratively updating the first face shape feature and the first expression feature with the first face as a fitting target such that a fitting result converge to the first face, and determining a first face shape feature and a first expression feature that are obtained from a last update as a target face shape feature and a target expression feature of the first face respectively

202

Fitting, by the terminal, the face vertex data of the plurality of faces by using a second face shape feature and a second expression feature as weighting coefficients, iteratively updating the second face shape feature and the second expression feature with the second face as a fitting target such that a fitting result converge to the second face, and determining a second face shape feature and a second expression feature obtained from a last update as a target face shape feature and a target expression feature of the second face respectively

203

Generating, by the terminal, a target face image of the second face based on the target expression feature of the first face, the target face shape feature of the second face, and a target face texture feature of the second face

204

FIG. 2

Acquiring, by the terminal, a face image of a first face, a face image of a second face, and face vertex data, wherein the face vertex data includes face vertex data of a plurality of faces with different face shapes and different expressions
301

Fitting, by the terminal, the face vertex data of the plurality of faces by using a preset first face shape feature and a preset first expression feature as weighting coefficients, determining a fitting error based on a fitting result and the face vertex data of the first face, and iteratively updating the preset first face shape feature and the preset first expression feature to reduce the fitting error
302

Determining, by the terminal, the first face shape feature and the first expression feature that are obtained from the last update as the target face shape feature and the target expression feature of the first face respectively
303

Fitting, by the terminal, the face vertex data of the plurality of faces by using a preset second face shape feature and a preset second expression feature as weighting coefficients, determining a fitting error based on a fitting result and face vertex data of the second face, and iteratively updating the preset second face shape feature and the preset second expression feature to minimize the fitting error
304

Determining, by the terminal, a second face shape feature and a second expression feature that are obtained from the last update as a target face shape feature and a target expression feature of the second face respectively
305

Acquiring, by the terminal, a target face texture feature of the second face
306

Generating, by the terminal, a target face image of the second face based on the target expression feature of the first face, the target face shape feature of the second face, and the target face texture feature of the second face
307

FIG. 3

FIG. 4

Face image of first sample face $I_r$

Face image of second sample face $I_a$

Face three-dimensional feature encoder $E_{3d}$

Face texture feature encoder $E_t$

Pose angle feature $\theta_r$
Face shape feature $id_r$
Expression feature $exp_r$

Pose angle feature $\theta_a$
Face shape feature $id_a$
Expression feature $exp_a$

Pose angle feature $\theta_r$
Face shape feature $id_a$
Expression feature $exp_r$

Face texture feature $f_t$

Expression-driven feature decocer $D_e$

Predicted face image $I_d$

FIG. 5

FIG. 6

700

Server

Processor 701

Memory 702

FIG. 7

## INTERNATIONAL SEARCH REPORT

| | International application No. |
|---|---|
| | **PCT/CN2022/134379** |

**A. CLASSIFICATION OF SUBJECT MATTER**

G06T 17/00(2006.01)i

According to International Patent Classification (IPC) or to both national classification and IPC

**B. FIELDS SEARCHED**

Minimum documentation searched (classification system followed by classification symbols)

IPC: G06T; G06K

Documentation searched other than minimum documentation to the extent that such documents are included in the fields searched

Electronic data base consulted during the international search (name of data base and, where practicable, search terms used)

CNABS, CNTXT, WOTXT, EPTXT, USTXT, CNKI, IEEE, VEN: 人脸, 图像, 顶点, 关键点, 五官, 形状, 表情, 特征, 加权, 权重, 拟合, 迭代, 纹理, 虚拟, 动画, 驱动, 三维, 二维, 刚性, 变换, 矩阵, 平移, 旋转, 姿态角, 视频, 帧, face, image, vertex, keypoint, penta, shape, expression, feature, weight, fit, iterative, texture, virtual, animation, drive, three-dimensional, two-dimensional, rigid, transform, matrix, translation, rotation, pose, angle, video, frame

**C. DOCUMENTS CONSIDERED TO BE RELEVANT**

| Category* | Citation of document, with indication, where appropriate, of the relevant passages | Relevant to claim No. |
|---|---|---|
| A | CN 110889381 A (GUANGZHOU HUADUO NETWORK TECHNOLOGY CO., LTD.) 17 March 2020 (2020-03-17) <br> description, paragraphs [0025]-[0118], and figures 1-12 | 1-12 |
| A | CN 108876879 A (TENCENT TECHNOLOGY (SHENZHEN) CO., LTD.) 23 November 2018 (2018-11-23) <br> entire document | 1-12 |
| A | CN 111985268 A (SOGOU (HANGZHOU) INTELLIGENT TECHNOLOGY CO., LTD. et al.) 24 November 2020 (2020-11-24) <br> entire document | 1-12 |
| A | CN 115272570 A (BOE TECHNOLOGY GROUP CO., LTD.) 01 November 2022 (2022-11-01) <br> entire document | 1-12 |
| A | US 2013215113 A1 (MIXAMO, INC.) 22 August 2013 (2013-08-22) <br> entire document | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 June 2023** | **23 June 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/134379**

| Patent document cited in search report | | | Publication date (day/month/year) | Patent family member(s) | | | Publication date (day/month/year) |
|---|---|---|---|---|---|---|---|
| CN | 110889381 | A | 17 March 2020 | WO | 2021103698 | A1 | 03 June 2021 |
| CN | 108876879 | A | 23 November 2018 | US | 2019333262 | A1 | 31 October 2019 |
| | | | | US | 11087519 | B2 | 10 August 2021 |
| | | | | WO | 2018205801 | A1 | 15 November 2018 |
| CN | 111985268 | A | 24 November 2020 | | None | | |
| CN | 115272570 | A | 01 November 2022 | | None | | |
| US | 2013215113 | A1 | 22 August 2013 | US | 2014204084 | A1 | 24 July 2014 |

Form PCT/ISA/210 (patent family annex) (July 2022)